# EUROPÄISCHE PATENTSCHRIFT

(11) **EP 1 379 374 B1**
(45) Veröffentlichungstag und Bekanntmachung des Hinweises auf die Patenterteilung: **15.08.2007**
(21) Anmeldenummer: 02708342.7
(22) Anmeldetag: 04.03.2002
(51) Int. Cl.: B29C 59/00, B29B 13/02, B29C 53/06

(54) **VORRICHTUNG UND VERFAHREN ZUM RILLEN BZW. FALZEN VON MEHRSCHICHTIGEN ODER MIT STEGEN VERSTEIFTEN KUNSTSTOFFMATERIALIEN AUF BEARBEITUNGSPLOTTERN**
DEVICE AND METHOD FOR SLOTTING OR FOLDING HOMOGENEOUS, MULTILAYER PLASTIC MATERIALS OR PLASTIC MATERIALS THAT ARE REINFORCED BY CROSSPIECES ON PROCESSING PLOTTERS
PROCEDE ET DISPOSITIF PERMETTANT DE RAINURER OU DE STRIER DES MATIERES PLASTIQUES A PLUSIEURS COUCHES OU RENFORCEES A L'AIDE D'ENTRETOISES SUR DES TRACEURS DE TRAITEMENT

(30) Priorität: 20.04.2001 DE 10119673
(43) Veröffentlichungstag der Anmeldung: 14.01.2004
(73) Patentinhaber: Aristo Graphic Systeme GmbH & Co KG, D-22525 Hamburg (DE)
(72) Erfinder: RIEPE, Claus-Wilhelm, 22605 Hamburg (DE); SCHRODT, Hans-Joachim, 22589 Hamburg (DE)
(74) Vertreter: UEXKÜLL & STOLBERG
(86) Internationale Anmeldenummer: PCT/EP2002/002341
(87) Internationale Veröffentlichungsnummer: WO 2002/085604

(56) Entgegenhaltungen:
- WO-A-96/01180
- DE-A- 19 508 665
- US-A- 5 354 533
- US-A- 5 356 696
- US-A- 5 501 758
- US-A- 6 056 840

## Beschreibung

Die Erfindung bezieht sich auf eine Vorrichtung und eine neues Verfahren, mit dem es ermöglicht bzw. wesentlich verbessert wird, auf einem numerisch gesteuerten Bearbeitungsplotter Rillungen in mehrschichtige und insbesondere mehrwandige, verstegte Kunststoffmaterialien einzubringen.

Bearbeitungsplotter sind bekannt. Es handelt sich um numerisch bzw. computergesteuerte Maschinen, bei denen ein bewegliches Werkzeug durch seine maschinengesteuerten Relativbewegungen zum Bearbeitungsgegenstand auf diesen sequentiell einwirkt, d.h. daß die Bearbeitung des Werkstückes im Zuge von bahnenmäßig gesteuerten Bewegungen im wesentlichen nacheinander erfolgt und fortlaufend vervollständigt wird. Bearbeitungsplotter sind aus numerisch gesteuerten Großzeichenmaschinen hervorgegangen und sie werden aufgrund ihrer hohen Arbeits- bzw. Verfahrgeschwindigkeiten zunehmend als computergesteuerte Produktionsmaschinen für kleinste bis mittlere Seriengrößen eingesetzt.

Rillungen bzw. Rillen sind längsgerichtete Verformungen und. Stauchungen in ebenen Materiallagen, die es ermöglichen bzw. erleichtern, ein steifes Kartonmaterial entlang einer definierten Linie zu knicken, wie es z.B. für die Auffaltung eines Kartons aus einer zusammenhängenden flachliegenden Kartonlage erforderlich ist. Rillungen werden bisweilen auch als Falzungen bzw. als Falze bezeichnet. Das Herstellen von Rillungen wird im folgenden zur Vereinfachung mit 'das Rillen', in der Verbform mit 'rillen' bezeichnet.

Bearbeitungsplotter werden heute vielfach eingesetzt, um mithilfe von Schneid- und Rillbearbeitungen Muster und Kleinmengen von Faltkartons und Wellkartonagen aus zellulosefaserbasierenden Kartonmaterialien herzustellen.

Das Rillen von Kartonlagen aus faserbasierenden Materialien ist bekannt. Siehe z.B. US-A-5,356,696. Dazu wird ein 'Rillwerkzeug' von der Bearbeitungsmaschine unter beträchtlichem Druck und unter beträchtlicher Geschwindigkeit entlang der Rillrichtung über bzw. durch das Material geführt. Durch den durch das Werkzeug ausgeübten Druck wird das faserbasierende Kartonmaterial an der Wirkstelle komprimiert und dadurch teilweise erweicht und teilweise bleibend deformiert. Die Materialeigenschaften von faserbasierenden Kartonagen z.B. aus Zellulosefasern mit verschiedenen Zuschlagstoffen sind üblicherweise und bekanntermaßen so, daß dabei eine unter einem ausreichenden Druck auch nur kurzzeitig erzeugte Verformung des Materials zu einem großen Teil erhalten bleibt, auch wenn der verursachende Druck wieder entfernt wird. Die dies bewirkenden materialtypischen Eigenheiten und z.T. komplexen Mechanismen in faserbasierenden Papier- und Kartonmaterialien, insbesondere auch von solchen mehrlagigen und durch Innenstege versteifte Materialien wie Wellkartonagen stehen hier nicht in Rede und müssen hier nicht näher erläutert werden.

Allerdings sind gewisse typische Eigenschaften von Papier-und Zellulose- faserbasierenden Materialien bekanntermaßen zugleich deren Nachteile: Neben der Eigenschaft, unter Druck und wiederholtem Gebrauch rasch zu knicken und zu erschlaffen, sind sie z.B. auch sehr feuchtigkeitsempflindlich und sie lassen sich daher, auch wegen Ihrer häufig offenporigen Oberfläche, nur schlecht reinigen.

Für Verwendungen, bei denen es auf größere Dauerstabilität, Feuchtigkeitsresistenz oder Sauberkeit bzw. Hygiene ankommt, bietet die Industrie alternative Materialien an, die zu überwiegenden Teilen aus polymeren Stoffen, d.h. aus Kunststoffen bestehen. Diese Kunststoffmaterialien, die insoweit geeignet sind die papier- und Zellulosefaserbasierenden Werkstoffe zu ersetzen, sind häufig so aufgebaut und gestaltet, daß sie hinsichtlich ihrer Gestaltung sowie ihrem inneren und äußeren Aufbau und ihren Abmessungen aus Zellulosefasern bestehenden Materialien entsprechen. So gibt es beispielsweise mehrlagige, durch Materialstege versteifte Materialien aus Kunststoff, die in ihrem inneren Aufbau dem Material 'Wellkarton' ähneln. Diese Materialien besitzen typischerweise beidseitig eine glatte Fläche und Oberfläche aus Deckmaterial, zwischen denen in einer Längsrichtung Stege aus dem gleichen Kunststoffmaterial verlaufen. Die Stege können aus regelmäßigen Auffaltungen von Material stammen, die im Fertigungsprozeß kontinuierlich mit dem Deckmaterial an ihren Berührungsflächen verbunden werden, oder die Herstellung von Deckplatten und Verbindungsstegen erfolgt in einem gemeinsamen thermisch unterstützten Extrusionsprozeß. Das so beschriebene Wellkarton-ähnliche, durch Stege versteifte Kunststoffmaterial kann aus verschiedenen überwiegend thermoplastischen Kunststoffen hergestellt sein, wie z. B. Polypropylen oder Polyäthylen. Zugleich können verschiedene faserige oder pulverige Zuschlagstoffe enthalten sein, wie z.B. Armierungsfasern oder Farbstoffe.

Der Einfachheit halber sollen die so beschriebenen mehrlagigen, beziehungsweise verstegten Kunstoffmaterialien, die das Objekt der im weiteren beschriebenen konkreten Bearbeitungen sind, im weiteren als 'Kunststoffwellplatte' oder als 'Stegplatte' bezeichnet werden.

Nun das Ausgangsproblem: Während die wirtschaftliche Bearbeitung von zellulosefaserbasierenden Kartonagen und Wellkartonagen auf Bearbeitungsplottern heute kein größeres Problem mehr darstellt, blieb bisher jedoch die entsprechende Bearbeitung von Materialien aus überwiegend polymerbasierenden Stoffen ein praktisch ungelöstes Problem.

Die Ursache hierfür liegt in dem grundlegend anderen mechanischen Verhalten der Kunststoffe gegenüber den Zellulosefaserwerkstoffen: Sie sind wesentlich elastischer und zäher als diese. Im Ergebnis führt dies dazu, daß z.B. eine für das Auffalten zu einem Karton erforderliche wirksame Rillung in das Kunstoffmaterial mithilfe eines für ein vergleichbares Kartonmaterial geeigneten Druckwerkzeuges nicht erreicht werden kann, da sich das Kunststoffmaterial zwar unter dem momentanen Werkzeugdruck wunschgemäß verformt, sich aber nach Entfernung des Werkzeugdruckes aufgrund seiner Zähigkeit praktisch wieder vollständig in seine Ausgangsform zurückbildet. Eine ausreichende und nachbleibende dauerhafte Verformung kann so regelmäßig nicht erreicht werden.

Man hat bisher keine zufriedenstellende Lösung für dieses Problem gefunden. Eine bekannte Umgehungstechnik für dieses Problem ist es bisher beispielsweise, auf einem Bearbeitungsplotter den Vorgang des 'Rillens' durch einen Vorgang des Profilfräsens zu ersetzen. Dabei wird statt einer Rillung mithilfe eines Profil-Fräswerkzeuges im Wege einer spanenden Bearbeitung die für die spätere Auffaltung des Behälters nach innen weisende Oberfläche der Stegplatte gemeinsam mit den darunterliegenden Stegen durchtrennt und teilweise entfernt. Mit diesem Verfahren kann zwar eine faltungsgeeignete Nut erzeugt werden, aber es wird im Bereich der Nut und der Faltung Material entfernt und damit die Tragkraft verringert. Zudem wird durch die Einfräsung durch die Oberfläche der Stegplatte im Bereich der Nut eine Öffnung in die Zwischenräume der Stege zwischen den Deckplatten geschaffen, durch die Schmutz in diese Zwischenräume gelangen kann, was die Reinigungsmöglichkeiten der so geschaffenen Behälter erschwert. Zudem tritt bei dieser Fertigungsmethode ohnehin ein Problem dadurch auf, daß aus dem Fräsvorgang üblicherweise Späne und Grate übrigbleiben, die die Qualität des Produktes beeinträchtigen können.

Ein anderer Lösungsversuch ist es, eine ausreichende Rillung mithilfe eines beheizten Rillwerkzeuges zu erzielen. Durch das beheizte Rillwerkzeug wird über die Berührungsflächen mit dem Material während der Rillbewegung und zugleich mit dem senkrecht erfolgenden Druck des Rillwerkzeuges Wärme auf das Material übertragen, so daß sich das Deck- und das Stegmaterial unter gleichzeitiger Einwirkung von Druck und Wärme bleibend zu einer ausreichenden und nachhaltigen Rillung verformen lassen sollen. Aber, durch die geringe thermische Leitfähigkeit von Kunststoff, in Verbindung mit der nur geringen möglichen Temperaturdifferenz von Werkzeug und Kunststoffmaterial, soll es nicht zu einem Schmelzen und Durchtrennen der Oberfläche kommen, arbeitet dieses Verfahren insbesondere bei dickeren Stegplatten nur bei äußerst geringen Geschwindigkeiten. Dieses Verfahren ist daher aufgrund seiner nur geringen erzielbaren Geschwindigkeit für eine wirtschaftliche Mengenproduktion nicht brauchbar.

Die hier vorliegende Erfindung hat die Aufgabe gelöst, nunmehr eine technisch einwandfreie Rillung bei Kunststoffwellplatten sowohl ohne Beschädigung oder gar Durchtrennung der Oberfläche als auch mit vertretbarer, wirtschaftlicher Produktionsgeschwindigkeit zu erreichen.

Dieses Ziel erreicht die vorliegende Erfindung durch die Verwendung von intensivem Licht mit hohen Infrarotanteilen zur inneren Materialerwärmung in Verbindung mit einem ansonsten unbeheizten Rillwerkzeug zur Druckaufbringung.

Aus den vorangegangenen Versuchen mit beheizten Rillwerkzeugen wurde ermittelt, daß das zu lösende Problem weniger in der Erwärmung an der Oberfläche des Werkstoffes liegt, die z.B. mithilfe eines beheizten Rillwerkzeuges sehr einfach zu lösen ist, als vielmehr in der Erwärmung in der 'Tiefe' des Materials, zum Beispiel der inneren Materialstege, welche die überwiegenden Rückstellkräfte gegen eine bleibende Rillung des Materials aufbringen.

Gesucht wurde demnach ein Verfahren, daß es erlaubt, eine lokal und vor allem auch in die Tiefe wirkende Materialerwärmung in einem engen räumlichen und zeitlichen Fenster gemeinsam mit der Druckbearbeitung durch das Rillwerkzeug zu bewirken.

Der ansonsten herkömmlich für eine Rillbearbeitung ausgestattete Bearbeitungsplotter wird hierzu zusätzlich mit einer erfindungsgemäßen Vorrichtung ausgestattet, die aus einer starken Lichtquelle besteht, die so angeordnet ist, daß diese im Arbeitsfall einen Lichtstrahl so auswirft, daß dessen ungefährer Strahlbereich bzw. Fokuspunkt in der Bewegungsrichtung der Rillbewegung kurz vor dem Rillwerkzeug liegt. Insbesondere hat es sich dabei als zweckdienlich erwiesen, wenn die Strahlachse der Lichtquelle nicht vertikal von oben auf das zu bearbeitende Material gerichtet ist, sondern wenn er das Material in der Nähe des Rillwerkzeuges unter einem Winkel trifft, der in einer Verlängerung irgendwo unter das Rillwerkzeug weist und um bis zu 45° von der Lotrechten unter der Lichtquelle abweichen kann.

Als Lichtquelle dient ein kleinformatiger Scheinwerfer mit Reflektor und ggfs. einer Fokussieroptik, die mit einem geeigneten leistungsfähigen Leuchtmittel wie z.B. einer Glühfadenlampe bestückt ist. Die Erfindung funktioniert, weil sie sich zunutze macht, daß solche Lichtquellen neben sichtbarem Licht einen hohen Anteil von Lichtenergie im infraroten Wellenlängebereich abstrahlen, welches geeignet ist, nicht nur die Oberfläche des Materials zu bestrahlen, sondern auch tief in das zu bearbeitende Kunststoffmaterial einzudringen bzw. es teilweise zu durchstrahlen.

Zur Durchführung des erfindungsgemäßen Verfahrens kann beispielsweise ein Bearbeitungsplotter dienen, der einen Werkzeugwagen für die Aufnahme eines Schneidmessers und eines Rillwerkzeuges aufweist, und an dem eine Beleuchtungseinheit vorgesehen ist, wobei die Beleuchtungseinheit einen starken Lichtstrahl in Richtung auf die Materialoberfläche aussendet, durch den die erforderliche Erwärmung des Werkstoffes bewirkt wird.

Die Erfindung wird im Folgenden anhand der Darstellungen und anhand eines Ausführungsbeispieles näher erläutert:
- Figur 1: zeigt in perspektivischer Draufsicht einen erfindungsgemäß hergerichteten Bearbeitungsplotter.
- Figur 2: zeigt den Werkzeugkopf (4) in Frontsicht.
- Figur 3: zeigt den Querschnitt durch ein Stegplattenmaterial aus Kunststoff .

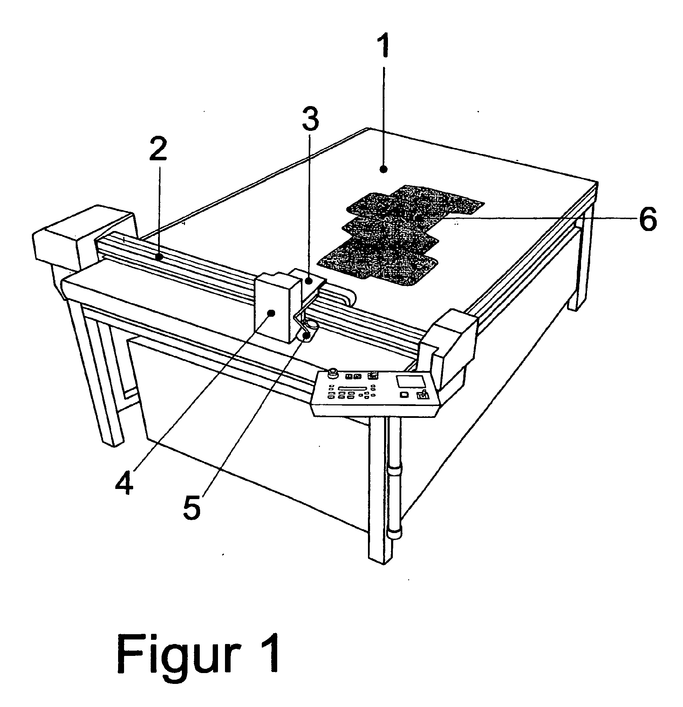

In Figur 1 ist die plane Arbeitsfläche 1 Träger für das zu bearbeitende Material. Sie wird überspannt von einer motorisch bewegbaren Querschiene 2, an der ein ebenfalls motorisch bewegbarer Werkzeugwagen 3 angebracht ist. Der Werkzeugwagen dient der Aufnahme verschiedener Werkzeuge, welche hier in einem gemeinsamen Werkzeugkopf 4 zusammengefasst dargestellt sind. An dem Werkzeugwagen ist zugleich die Lichtquelle 5 angebracht, die ihren Lichtstrahl in Richtung auf das Material in der Nähe der Werkzeuge abgibt, bzw. abgeben kann.

Auf der Arbeitsfläche des Bearbeitungsplotters liegend ist ein fertig geschnittenes und gerilltes Muster eines Kartons 6 dargestellt, wie es durch die Produktion auf dem Bearbeitungsplotter entstanden sein könnte.

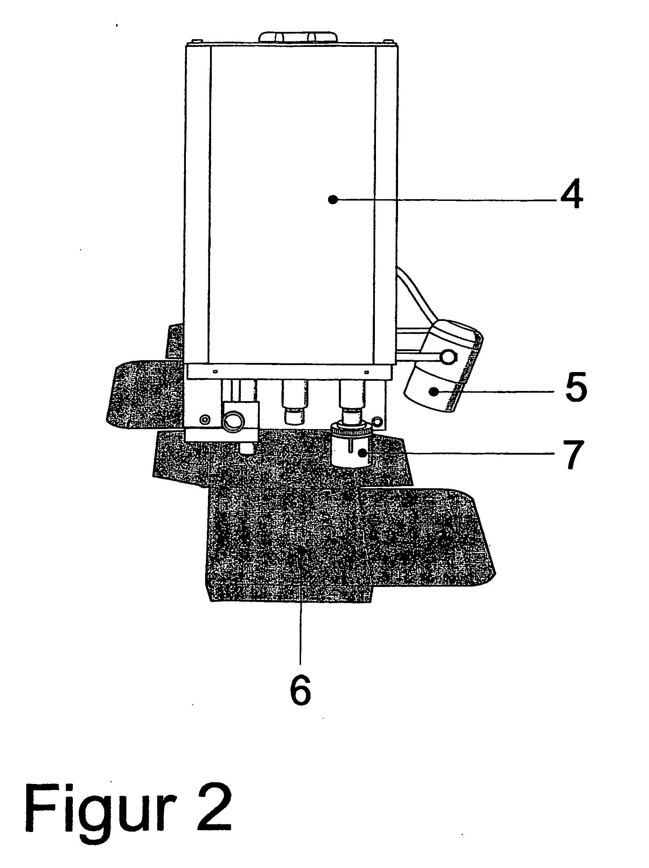

Dargestellt in Figur 2 ist u.a. das Rillwerkzeug 7 in seiner Ruhelage, und die ungefähre, günstige Anordnung der Lichtquelle 5 in Bezug auf das Rillwerkzeug. Unter dem Werkzeugkopf liegend ist wiederum dargestellt das fertig bearbeitete Muster eines Kartonzuschnitts 6.

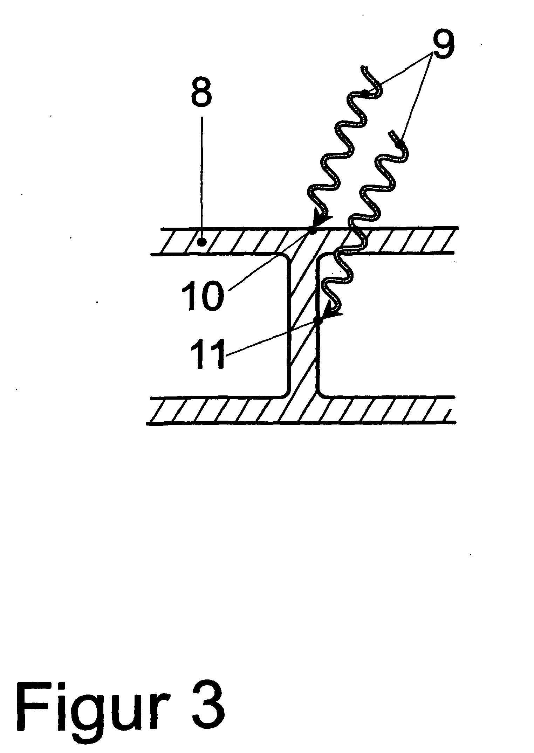

Figur 3 zeigt, wie Licht- bzw. Wärmestrahlen 9 auf das Kunststoffmaterial 8 treffen und einwirken, sowohl an der Oberfläche 10, wie im Inneren der Stegplatte, auf den dargestellten Steg 11. Die Abbildung zeigt zugleich den Vorteil, der sich bezüglich der inneren Erwärmung des Materials aus einer Schrägstellung der Lichtquelle ergeben kann: Die Strahlen können z.B. nach Durchdringen der Deckschicht einen Steg 11 auch seitlich einfallend erreichen.

Die Durchführung des Verfahrens wird wie folgt beschrieben:
1. Abhängig von der zu erwartenden Bewegungsrichtung des Bearbeitungswerkzeuges und abhängig von der Stärke des zu bearbeitenden Materials, sowie abhängig von dem Material wird die Lichtquelle bezüglich ihrer Strahlachse und des Strahlwinkels so ausgerichtet, daß sie jeweils einen Materialbereich bestrahlt, kurz bevor dieser von dem Rillwerkzeug erreicht wird. Es ist ausdrücklich erwünscht, daß dieser Strahlbereich seitlich über den Bereich hinausreicht, der von dem Rillwerkzeug selbst berührt werden wird, da auf diese Weise Zugkräfte verringert werden können, die sich in der Oberflächenlage der Kunststoffwellplatte bilden, wenn das Rillwerkzeug in das Material eindrückt.
2. Die Lichtquelle ist bezüglich ihres Betriebszustandes und in Bezug auf ihre Leistungsabgabe so mit dem Bearbeitungsplotter verbunden und abgestimmt, daß ihre Leistungsabgabe in Abhängigkeit von der Bewegungsgeschwindigkeit des Rillwerkzeuges gesteuert ist. Sie erstrahlt, wenn die Bewegung des Werkzeuges beginnt und die Bearbeitungsgeschwindigkeit zunimmt. Sie erlischt, wenn die Bearbeitungsgeschwindigkeit abnimmt und zum Stillstand kommt. Dabei wird die laufende Leistungsabgabe der Lichtquelle so angepasst und gesteuert, daß diese nicht zu einer thermischen Schädigung oder gar zu einer Entzündung des Kunststoffes führt, sondern nur zu einer lokalen, vorübergehenden Plastifizierung durch Erwärmung.
3. Der Bearbeitungplotter beginnt computergesteuert das Rillwerkzeug abzusenken, in das Material einzudrücken und bezüglich des Materials zu verfahren. Zugleich hat die Lichtquelle begonnen, das Material zu bestrahlen und teilweise zu durchstrahlen. Die auf das Material treffende und teilweise in das Material eindringende Strahlung bewirkt in und unter ihrem Strahlbereich eine thermisch begründete Erweichung des Kunststoffes, sowohl der Oberfläche wie auch des Materials bzw. der Materialstege im Innern.
4. Durch das drückende Rillwerkzeug wird eine Stauchung des erwärmten Materials bewirkt. Wegen der teilweisen thermischen Erweichung des Materials sind die Stauch- und Rückstellkräfte verringert. Sobald der Wirkbereich der Strahlung verlassen wird, erkaltet das Material in der neugefundenen, gestauchten Form. Damit bleibt die so erzeugte 'Rillung' dauerhaft erhalten.
5. In einem nachfolgenden Bearbeitungsschritt benutzt die Maschine ein Messerwerkzeug, um das gerillte Teil, entsprechend der von der Computersteuerung vorgegebenen Geometrie und Bahn, auszuschneiden.
6. Der noch flachliegende Zuschnitt kann von der Arbeitsfläche abgenommen und entlang der erzeugten Rillungen sicher und leicht in ein Produkt aufgefaltet werden.

## Patentansprüche

1. Verfahren zum Rillen bzw. Falzen von homogenen, mehrlagigen oder mehrschichtigen oder mit Stegen versteiften biegesteifen Materialien aus thermoplastischen Kunststoffen auf Bearbeitungsplottern, **dadurch gekennzeichnet, daß** das Material in enger räumlicher Nähe und vorangehend zu dem mechanischen Rillprozeß mithilfe eines drückenden Rillwerkzeuges durch eine unmittelbar vorangehende gezielte und kontrollierte Einwirkung von Lichtstrahlung mit Infrarotanteilen thermisch erweicht wird.

2. Bearbeitungsplotter zur Durchführung des Verfahrens gemäß Anspruch 1, mit einem Werkzeugwagen (3) zur Aufnahme eines Werkzeuges und einer verfahrensgeeigneten Lichtquelle (5) zur Bestrahlung des durch das Werkzeuges zu bearbeitende Material, **dadurch gekennzeichnet, daß** die Lichtquelle einen gerichteten Lichtstrahl hoher Strahlleistungsdichte auf das Material abgibt und die so angeordnet ist, daß diese im Arbeitsfall einen Lichtstrahl so auswirft, daß dessen Wirkbereich bzw. Fokusbereich in der Bewegungsrichtung der Rillbewegung nahe vor dem Rillwerkzeug (7) auf die Materialoberfläche trifft, oder die Lotrechte unterhalb des Rillwerkzeuges in irgendeinem Punkte unterhalb der Oberfläche des Materials schneidet.

3. Bearbeitungsplotter nach Anspruch 2, **dadurch gekennzeichnet, daß** die Lichtquelle ein Scheinwerfer mit einer Reflektoreinheit oder einer Fokussieroptik ist, die als Leuchtmittel eine Glühfadenbirne verwendet.

4. Bearbeitungsplotter nach Anspruch 2, **dadurch gekennzeichnet, daß** die Lichtquelle eine Laserstrahlquelle ist.

5. Bearbeitungsplotter nach Anspruch 2 und 3, **dadurch gekennzeichnet, daß** der Werkzeugwagen mehr als eine solche Lichtquelle besitzen kann.

6. Bearbeitungsplotter nach Anspruch 2 und 4, **dadurch gekennzeichnet, daß** der Werkzeugwagen mehr als eine solche Strahlquelle besitzen kann.

## Claims

1. Method for scoring and folding homogeneous, multilayer or multi-ply materials made of thermoplastic synthetic materials that are rigid or reinforced with webs on processing plotters, **characterized in that**, in the close physical vicinity and in advance of the mechanical scoring process with the aid of a pressing scoring tool, the material is softened thermally as a result of the immediately preceding specific and controlled action of light radiation having infrared components.

2. Processing plotter for performing the method according to Claim 1, having a tool carriage (3) for holding a tool and a light source (5) suitable for the method for irradiating the material to be processed by the tool, **characterized in that** the light source emits a directed light beam of high beam power density onto the material and is arranged in such a way that, in operation, it emits a light beam in such a way that its effective region or focal region strikes the material surface close in front of the scoring tool (7) in the direction of movement of the scoring movement, or intersects the perpendicular underneath the scoring tool at some points underneath the surface of the material.

3. Processing plotter according to Claim 2, **characterized in that** the light source is a headlamp having a reflector unit or focusing optics, which uses an incandescent filament bulb as illuminating means.

4. Processing plotter according to Claim 2, **characterized in that** the light source is a laser beam source.

5. Processing plotter according to Claim 2 and 3, **characterized in that** the tool carriage can have more than one such light source.

6. Processing plotter according to Claim 2 and 4, **characterized in that** the tool carriage can have more than one such radiation source.

## Revendications

1. Procédé de rainurage et/ou de striage de matériaux homogènes, rigides en flexion, multicouches ou multiplis ou rigidifiés par des cloisons et constitués de matières thermoplastiques, sur des traceurs de traitement, **caractérisé en ce que**, de manière très proche dans l'espace et préalablement au processus de rainurage mécanique, le matériau est ramolli thermiquement à l'aide d'un outil de rainurage exerçant une pression et grâce à l'action ciblée et contrôlée d'un rayonnement lumineux à fractions infrarouges qui précède immédiatement l'action de l'outil.

2. Traceur de traitement pour la mise en oeuvre du procédé selon la revendication 1, comprenant un chariot à outil (3), destiné à recevoir un outil, et une source lumineuse (5) adaptée au procédé et destinée à irradier le matériau devant être traité par l'outil, **caractérisé en ce que** la source lumineuse envoie un rayon lumineux dirigé, à haute densité de puissance, sur le matériau et est disposée de manière telle que, lors du fonctionnement, elle émette un rayon lumineux de façon à ce que la zone d'action ou la zone focale de celui-ci, dans le sens du mouvement de rainurage, arrive sur la surface du matériau juste avant l'outil de rainurage (7) ou coupe la verticale en dessous de l'outil de rainurage, en un point quelconque situé en dessous de la surface du matériau.

3. Traceur de traitement selon la revendication 2, **caractérisé en ce que** la source lumineuse est un projecteur doté d'une unité à réflecteur ou d'un système optique de focalisation qui utilise une lampe à incandescence en tant que moyen d'éclairage.

4. Traceur de traitement selon la revendication 2, **caractérisé en ce que** la source lumineuse est une source de rayonnement laser.

5. Traceur de traitement selon les revendications 2 et 3, **caractérisé en ce que** le chariot à outil peut comprendre plus d'une source lumineuse de ce type.

6. Traceur de traitement selon les revendications 2 et 4, **caractérisé en ce que** le chariot à outil peut comprendre plus d'une source de rayonnement de ce type.
